# DEMANDE DE BREVET EUROPEEN

(11) **EP 2 211 436 A1**
(43) Date de publication de la demande: **28.07.2010**
(21) Numéro de dépôt: 10151539.3
(22) Date de dépôt: 25.01.2010
(51) Int. Cl.: H02G 3/04

(54) **Goulotte en tole pour chemin de cables**

(30) Priorité: 26.01.2009 FR 0950449
(71) Demandeur: Gewiss France SAS, 21430 Liernais (FR)
(72) Inventeur: Leguy, Claude, 21430 Marcheseuil (FR)
(74) Mandataire: Myon, Gérard Jean-Pierre

(57) **Abrégé**

Cette goulotte (2) pour chemin de câbles est en tôle et comprend un fond (4) et deux parois latérales (6, 8). Elle est monobloc et formée de plusieurs modules (21-26) qui comportent chacun une partie centrale (41-46) définissant une portion du fond (4) de la goulotte et deux parties latérales (61-66, 81-86) définissant chacune une portion d'une des parois latérales (6, 8) de la goulotte. Certaines au moins (81-86) des parties latérales de deux modules adjacents sont reliées par une bande (812-856) monobloc avec ces modules et déformable entre une première configuration, où elle est plane, dans le prolongement des parties latérales (81-86), et maintient un écart (d₈) entre les parties latérales à une première valeur (L₈₁₂), et une deuxième configuration, où elle est pliée et maintient l'écart (d₈) entre les parties latérales (81-86) à une deuxième valeur inférieure à la première valeur.

## Description

L'invention a trait à une goulotte en tôle pour chemin de câbles, cette goulotte comprenant un fond et deux parois latérales.

Il est connu, par exemple de FR-A-2 686 141, de réaliser un chemin de câbles en aboutant plusieurs goulottes en tôle et en assemblant ces dernières aux moyens d'éclisses. Lorsqu'il convient d'effectuer un changement de direction, dans un plan horizontal, il est connu de EP-A-0 930 685 d'utiliser un ensemble de changement de direction comprenant deux éléments latéraux et un fond équipé d'une partie sécable permettant d'ajuster sa dimension à la largeur des goulottes. L'angle que permet de réaliser un tel ensemble de changement de direction est fixe, par exemple égal à 45° et, lorsqu'on souhaite réaliser un changement de direction à 90°, on juxtapose deux fonds appartenant à de tels ensembles. Cette construction donne globalement satisfaction.

Dans certaines configurations d'utilisation, il est toutefois nécessaire d'effectuer des changements de direction avec des angles qui ne sont pas des multiples de 45°, notamment lorsque le chemin de câbles supporte des câbles ou des conduits de fortes sections. En outre, l'ensemble connu comprend trois parties, à savoir un fond et deux côtés, qui doivent être approvisionnées et apportée sur le site d'installation en plus des goulottes. Il peut arriver que l'installateur oublie une partie d'un tel ensemble, voire la totalité, ce qui retarde la mise en place du chemin de câbles.

Il est par ailleurs connu de NL-A-273 895 de réaliser un ensemble de goulottes en engageant des charnières dans les côtés de deux goulottes à abouter. Ceci impose d'approvisionner sur un chantier divers composants et rend le montage relativement complexe. En outre, les charnières s'adaptent à la position relative des goulottes aboutées mais ne permettent pas de maintenir un écart donné entre les côtés de ces goulottes.

C'est à ces inconvénients qu'entend plus particulièrement remédier l'invention en proposant une nouvelle goulotte particulièrement simple à installer et qui permet de réaliser différentes configurations d'installation.

A cet effet, l'invention concerne une goulotte en tôle pour chemin de câbles comprenant un fond et deux parois latérales. Cette goulotte monobloc et formée de plusieurs modules qui comportent chacun une partie centrale définissant une portion du fond de la goulotte et deux parties latérales définissant chacune une portion d'une des parois latérales de la goulotte, alors que certaines au moins des parties latérales de deux modules adjacents sont reliées par une bande monobloc avec ces modules et déformable entre une première configuration, où elle est plane et dans le prolongement des parties latérales, tout en maintenant un écart entre ces parties latérales à une première valeur, et une deuxième configuration, où elle est pliée et maintient l'écart entre les parties latérales à une deuxième valeur inférieure à la première valeur.

Grâce à l'invention, la bande qui relie les parties latérales des modules constitue une partie d'une paroi latérale de la goulotte de tôle lorsqu'elle est en configuration plane, alors qu'elle peut se déformer pour permettre le rapprochement des parois latérales des deux modules, ce qui permet de conférer à la goulotte une configuration courbe, sans avoir à utiliser un ensemble devant être rapporté à l'extrémité de la goulotte. Ainsi, l'installateur dispose d'une goulotte qu'il peut, au choix, installer en configuration rectiligne ou en configuration courbe, sans avoir recours à des accessoires extérieurs à cette goulotte. En ce sens, la goulotte peut être qualifiée de « autodirectionnelle » car elle est capable à elle seule de fixer l'angle de déviation des câbles ou autres éléments analogues qu'elle reçoit.

Selon des aspects avantageux mais non obligatoires de l'invention, une telle goulotte peut incorporer une ou plusieurs des caractéristiques suivantes, prises dans toutes les combinaisons techniquement admissibles :
- La goulotte est obtenue par découpage et pliage d'un flan de tôle.
- La goulotte comprend au moins trois modules et chaque module est relié à un module adjacent par une bande monobloc et déformable entre deux configurations où cette bande maintient l'écart, entre une paroi latérale de ce module et une paroi d'un module adjacent, à deux valeurs différentes.
- Lorsque toutes les bandes latérales sont dans leur première configuration, la goulotte est rectiligne, alors que, lorsque l'une au moins des bandes latérales est dans sa deuxième configuration, la goulotte est coudée.
- La goulotte comprend des moyens d'immobilisation de la ou de chaque bande dans sa seconde configuration.
- La bande est pourvue de zones de pliage préférentielles, selon au moins trois lignes. Ces lignes peuvent être parallèles.
- Les parties latérales d'au moins un module ont des longueurs différentes, selon une direction parallèle à un axe longitudinal de la goulotte en configuration rectiligne, alors qu'une bande déformable relie les parties latérales les plus courtes de deux modules adjacents. Ceci permet aux parties latérales les plus courtes des deux modules adjacents et à la bande déformable de constituer la paroi latérale intérieure d'une zone courbe de la goulotte en configuration coudée.
- La partie centrale d'un module comprend un premier bord et un deuxième bord qui relient ses parties latérales et ne sont pas parallèles, un premier bord d'un premier module étant non parallèle à un deuxième bord d'un deuxième module qui lui est adjacent lorsque la bande est dans sa première configuration. Dans ce cas, la partie centrale d'un module est avantageusement pourvue d'une languette qui s'étend à partir de son premier bord et qui est apte à venir en recouvrement de la partie centrale d'un module adjacent, lorsque la bande est dans sa deuxième configuration.
- Lorsque la bande est pourvue de lignes de pliage préférentielle, ces lignes peuvent être concourantes, vers le haut ou vers le bas lorsque la goulotte repose par son fond sur une surface plane.
- Les parties latérales d'un module ont la même longueur, selon une direction parallèle à un axe longitudinal de la goulotte en configuration rectiligne, alors qu'une bande déformable relie chaque partie latérale d'un module avec une partie latérale d'un module adjacent. En d'autres termes, des bandes déformables sont prévues sur les deux côtés d'un module.
- La goulotte comprend au moins trois modules et la ou les bandes reliant certaines parties latérales de deux modules sont aptes à être déformées de leur première configuration vers leur deuxième configuration indépendamment de la ou les bandes reliant deux autres modules, de telle sorte que la goulotte peut prendre au moins deux configurations coudées distinctes, en plus d'une configuration rectiligne.

L'invention sera mieux comprise et d'autres avantages de celles-ci apparaîtront plus clairement à la lumière de la description qui va suivre de cinq modes de réalisation d'une goulotte conforme à son principe, donnée uniquement à titre d'exemple et faite en référence aux dessins annexés dans lesquels :
- la figure 1 est une vue en perspective d'une goulotte conforme à l'invention, en configuration rectiligne ;
- la figure 2 est une vue de dessus de la goulotte de la figure 1 ;
- la figure 3 est une vue en perspective à plus grande échelle de la goulotte des figures 1 et 2 dans une configuration coudée ;
- la figure 4 est une vue de dessus de la goulotte dans la configuration de la figure 3 ;
- la figure 5 est une vue de dessus, analogue à la figure 4, lorsque la goulotte est dans une autre configuration ;
- la figure 6 est une vue en perspective d'une goulotte conforme à un deuxième mode de réalisation de l'invention, en configuration coudée ;
- la figure 7 est une vue en perspective d'une goulotte conforme à un troisième mode de réalisation de l'invention, en configuration coudée ;
- la figure 8 est une vue en perspective d'une goulotte conforme à un quatrième mode de réalisation de l'invention dans une première configuration rectiligne ;
- la figure 9 est une vue en perspective de la goulotte de la figure 8, dans une deuxième configuration coudée ;
- la figure 10 est une vue en perspective d'une goulotte conforme à un cinquième mode de réalisation de l'invention, dans une première configuration rectiligne ; et
- la figure 11 est une vue en perspective de la goulotte de la figure 10, dans une deuxième configuration coudée.

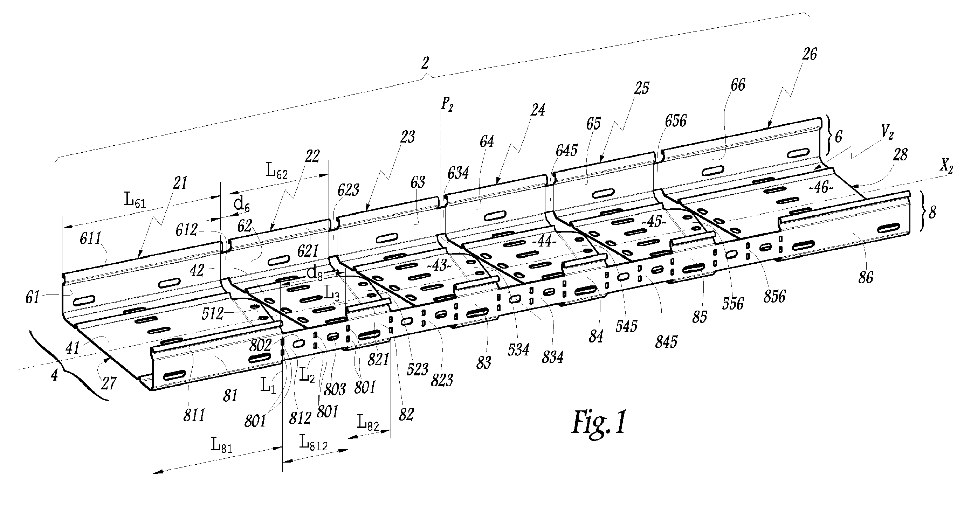

La goulotte 2 représentée aux figures 1 à 5 est destinée à recevoir des câbles, conduites ou analogues, en étant montée sur une structure fixe telle qu'un bâtiment industriel, aux moyens de supports tels que connus, par exemple, de FR-A-2 843 784. Avant son installation sur site, cette goulotte est rectiligne, à section transversale en U à fond plat.

On note X₂ un axe longitudinal de la goulotte 2 dans cette configuration. Dans ce qui suit, une dimension est dite « axiale » lorsqu'elle est parallèle à l'axe X₂.

La goulotte 2 définit un fond 4 et deux parois latérales 6 et 8. Un volume V₂ de réception de câbles ou analogues est défini au-dessus du fond 4, entre les parois 6 et 8.

La goulotte 2 est monobloc et formée par découpage et pliage d'un flan de tôle d'épaisseur égale à 1 mm environ.

La goulotte 2 est formée par six modules 21, 22, 23, 24, 25 et 26 qui définissent chacun une partie du fond 4 et une partie des parois 6 et 8.

Le module 21 définit une partie 41 du fond 4, ainsi qu'une partie 61 de la paroi 6 et une partie 81 de la paroi 8. La longueur axiale L₆₁ de la partie 61, prise parallèlement à l'axe X₂ est supérieure à la longueur axiale L₈₁ de la partie 81. Le module 26 est symétrique du module 21 par rapport à un plan P₂ perpendiculaire à l'axe X₂ et équidistant des bords d'extrémité 27 et 28 de la goulotte 2. Le module 26 définit une partie 46 du fond 4 et deux parties 66 et 86 des parois 6 et 8, la partie 86 étant plus courte axialement que la partie 66.

Le module 22 définit une partie 42 du fond 4 ainsi que des parties 62 et 82 des parois 6 et 8. La longueur L₆₂ de la partie 62, prise parallèlement à l'axe X₂ est supérieure à la longueur axiale L₈₂ de la partie 82.

Les modules 23, 24 et 25 sont identiques au module 22 et définissent respectivement chacun une partie 43, 44, 45 du fond 4, ainsi qu'une partie 63, 64, 65 de la paroi 6 et une partie 83, 84, 85 de la paroi 8.

Les portions de parois 61 et 62 sont pourvues de rebords 611, respectivement 621 courbés vers l'extérieur, de même que les portions de paroi 81 et 82 sont pourvues de rebord 811 et 821 également courbés vers l'extérieur. Les rebords 611 et 621 ne sont pas jointifs, pas plus que les rebords 811 et 821. On note d₆ la distance, prise parallèlement à l'axe X₂, entre les rebords 611 et 621, cette distance correspondant en fait à la distance entre les portions de parois 61 et 62. Cette distance correspond également à la distance entre les portions de fond 41 et 42, au voisinage des portions de parois 61 et 62.

On note d₈ la distance, prise parallèlement à l'axe X₂, entre les rebords 811 et 821, cette distance ou écart axial correspondant, en pratique, à la distance entre les portions de parois 81 et 82, et entre les portions de fond 41 et 42, au voisinage de ces portions de parois.

Une bande de tôle pleine 612, monobloc avec les modules 21 et 22, relie les portions de parois 61 et 62. La distance d₆ est égale à la longueur axiale de la bande 612. De la même manière, une bande de tôle 812 monobloc avec les modules 21 et 22 relie les portions de paroi 81 et 82. La distance d₈ est égale à la longueur axiale de la bande 812.

Les bandes 612 et 812 s'étendent, en hauteur, c'est-à-dire perpendiculairement au fond 4, entre, d'une part, les parties coudées de jonction des portions 61 et 62, ou 81 et 82 avec les parties de fond 41 et 42 et, d'autre part, les bords 611 et 621, ou 811 et 821.

De la même manière, les portions 62, 63, 64, 65 et 66 de parois latérales 6 définies par les modules 22, 23, 24, 25 et 26 sont reliées deux à deux par des bandes de tôle pleine que l'on note respectivement 623, 634, 645 et 656. De la même manière également, les portions 82, 83, 84, 85 et 86 de la paroi latérale 8 définies respectivement par les modules 22, 23, 24, 25 et 26 sont reliés deux à deux par des bandes de tôle que l'on note respectivement 823, 834, 845 et 856. Comme la goulotte 2 est monobloc, les bandes 623, 634, 645, 656, 823, 834, 845 et 856 sont monoblocs avec les modules qu'elles relient.

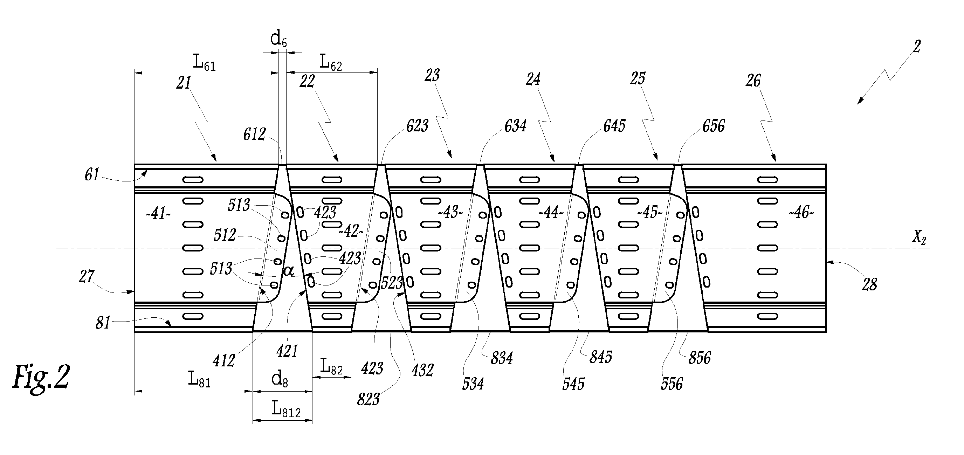

On note 412 le bord du fond 41 du module 21 qui est à l'opposé du bord 27, c'est-à-dire tourné vers le module 22. On note 421 le bord du fond 42 tourné vers le fond 41. Ces bords sont rectilignes et, dans la configuration des figures 1 et 2, ils convergent en se rapprochant de la paroi 6.

A partir du bord 412, s'étend une languette 512, qui est plane et parallèle au fond 41 mais qui est décalée vers le bas, c'est-à-dire à l'opposé des parois 6 et 8, par rapport à ce fond, d'une hauteur correspondant sensiblement à l'épaisseur des fonds 41 et 42.

De la même manière, on note 423 le bord du fond 42 tourné vers le fond 43 formé par le module 23 et 432 le bord du fond 43 tourné vers le fond 42. Une languette 523 de forme et de dimensions identiques à celles de la languette 512, s'étend à partir du bord 423.

La même architecture est reproduite, avec des languettes 534, 545 et 556, entre les modules 23 et 24, entre les modules 24 et 25 et entre les modules 25 et 26.

Lorsque la goulotte 2 doit être utilisée en configuration rectiligne, elle est montée dans la configuration représentée aux figures 1 et 2 où les fonds respectifs 41 et 46 des modules 21 et 26 sont centrés sur le même axe X₂. L'installateur n'a pas à intervenir sur la géométrie de la goulotte et les bandes 612, 623, 634, 645, 656, d'une part, 812, 821, 823, 834, 845 et 856, d'autre part, coopèrent avec les portions 61 à 66, d'une part, 81 à 86, d'autre part, des modules 21 à 26 pour constituer les parois latérales rectilignes 6 et 8 de la goulotte 2. Les bandes 812, 823, 834, 845 et 856 sont alors dans le prolongement des parties de paroi 81, 82, 83, 84, 85 et 86.

Lorsque la goulotte est dans la configuration rectiligne des figures 1 et 2, la longueur axiale de la bande 812 a une valeur maximale L₈₁₂.

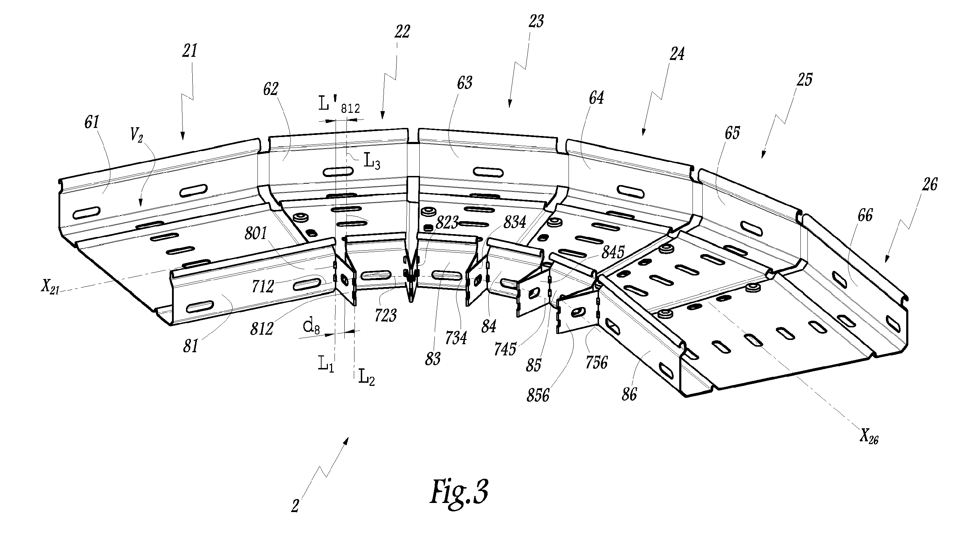

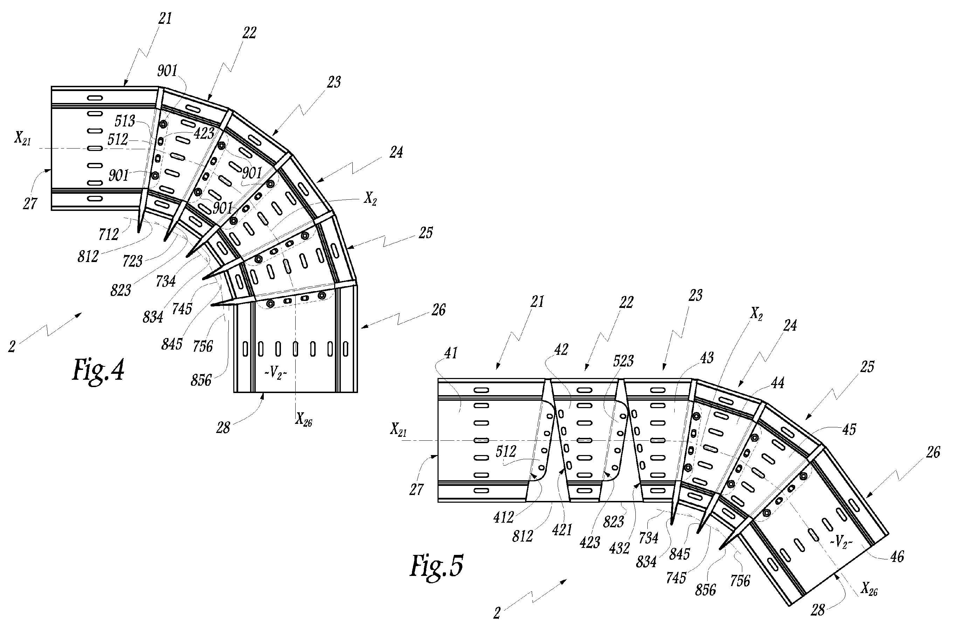

Lorsqu'il convient de réaliser un coude dans un plan horizontal avec la goulotte 2, celle-ci est déformée pour adopter, par exemple, la configuration des figures 3 et 4. Dans cette configuration, chacune des bandes 812, 823, 834, 845 et 856 est pliée sur elle-même, le long de trois lignes de pliage L₁, L₂ et L₃ qui sont parallèles entre elles et perpendiculaires au fond 4, c'est-à-dire verticales lorsque le fond 4 repose sur une surface horizontale. La goulotte 2 peut également être montée sur chant. Dans ce cas, le fond 4 repose contre une paroi verticale telle qu'un mur et les lignes L₁ à L₃ sont horizontales.

Les lignes de pliage L₁, L₂ et L₃ sont définies par des perçages 801 et constituent des zones d'affaiblissement de la matière constitutive de la paroi 8.

Ainsi, en pliant la bande 812 sur elle-même, c'est-à-dire vers l'extérieur de la goulotte 2 au niveau des lignes de pliage L₁ et L₃ et vers l'intérieur au niveau de la ligne de pliage L₂, on peut rapprocher les bords 412 et 421 au voisinage de la paroi 8 et engager la languette 512 sous le fond 42 du module 22. Ce rapprochement des bords 412 et 421 est possible grâce à un léger cintrage de la bande 612, au niveau de sa jonction avec les portions de paroi 61 et 62.

Dans cette configuration, l'axe X₂ est courbe et la longueur axiale de la bande 812 est réduite à une valeur L'₈₁₂ inférieure à la valeur L₈₁₂ du fait du pliage de la bande 812 sur elle-même au niveau des lignes L₁ à L₃. Ainsi, la distance d₈ est diminuée par rapport à sa valeur dans la configuration rectiligne des figures 1 et 2. En pratique, la distance d₈ est égale à l'écart axial entre les lignes L₁ et L₃.

En procédant de la même façon pour chacune des bandes 823, 834, 845 et 856 on réduit les distances respectives entre les parties 82 à 86 de la paroi 8 et on parvient dans la configuration des figures 3 et 4 où le module 21 est centré sur un axe X₂₁ perpendiculaire au bord 27, alors que le module 26 est centré sur un axe X₂₆ qui est perpendiculaire au bord 28 et à l'axe X₂₁. L'angle de déviation obtenu avec la goulotte est ainsi de 90°.

Pour atteindre ce résultat, l'angle α entre les bords 412 et 421 dans la configuration des figures 1 et 2 est égal à 18, de même que les angles définis de la même façon entre les bords en regard des différentes parties 42, 43, 44, 45 et 46 du fond 4. Dans la configuration des figures 3 et 4, les bords 412 et 421 sont parallèles, de même que les bords 423 et 432 et les bords correspondants des parties 43 et 46.

La bande 812 est pourvue de deux perçages 802 et 803 dans lesquels peut être introduite une vis 712 représentée par son trait d'axe aux figures 3 et 4. Ceci permet d'immobiliser la bande 812 dans la configuration pliée sur elle-même des figures 3 et 4. Les autres bandes 823, 834, 845 et 856 sont également pourvues de perçages analogues aux perçages 802 et 803, ce qui permet de mettre en place des vis de blocage 723, 734, 745 et 756 représentées par leurs traits d'axe respectifs aux figures 3 et 4.

Par ailleurs, la languette 512 est pourvue de plusieurs perçages 513, alors que le fond 42 est pourvu de plusieurs perçages 423, ces perçages venant en alignement les uns des autres dans la configuration des figures 3 et 4, ce qui permet d'y insérer des vis 901. Comme représenté aux figures 3 et 4, il suffit d'insérer des vis 901 dans les perçages superposés 513 et 423 les plus proches des parois 6 et 8. Toutefois, en variante, il est possible d'insérer de telles vis dans tous les perçages en question ou, au contraire dans un seul d'entre eux.

Une structure analogue est adoptée pour les autres languettes 523 et équivalentes et des vis 901 sont utilisées également à la jonction entre les fonds 42 et 43, 43 et 44, 44 et 45, 45 et 46.

Comme représenté à la figure 5, il n'est pas obligatoire de réaliser un coude à 90° avec la goulotte 2 et l'on peut choisir de plier seulement certaines des bandes 812, 823, 834, 845 et 856. Par exemple, seules les bandes 834, 845 et 856 peuvent être pliées sur elles-mêmes, de telle sorte que les axes X₂₁ et X₂₆ forment alors entre eux un angle de déviation de 54°. Dans ce cas, on utilise seulement les vis 734, 745 et 756 et des vis 901 à la jonction entre les fonds 43, 44, 45 et 46.

L'invention donne donc une grande liberté à l'installateur qui peut adapter la configuration de la goulotte 2 au site d'installation et à la rigidité des câbles et/ou conduites à mettre en place dans le volume V₂, sans avoir recours à des accessoires extérieurs, à l'exception des vis 712, 723, 734, 745, 756 et 901, qui sont des matériels standards et dont dispose toujours un installateur.

En variante, on peut utiliser, à la place des vis précitées, d'autres moyens de retenue des bandes 812 et équivalente en configuration pliée, tels que des rivets, des points de soudure ou des points de clinchage, en particulier lorsque l'angle de déviation entre les axes X₂₁ et X₂₆ est fixé en usine.

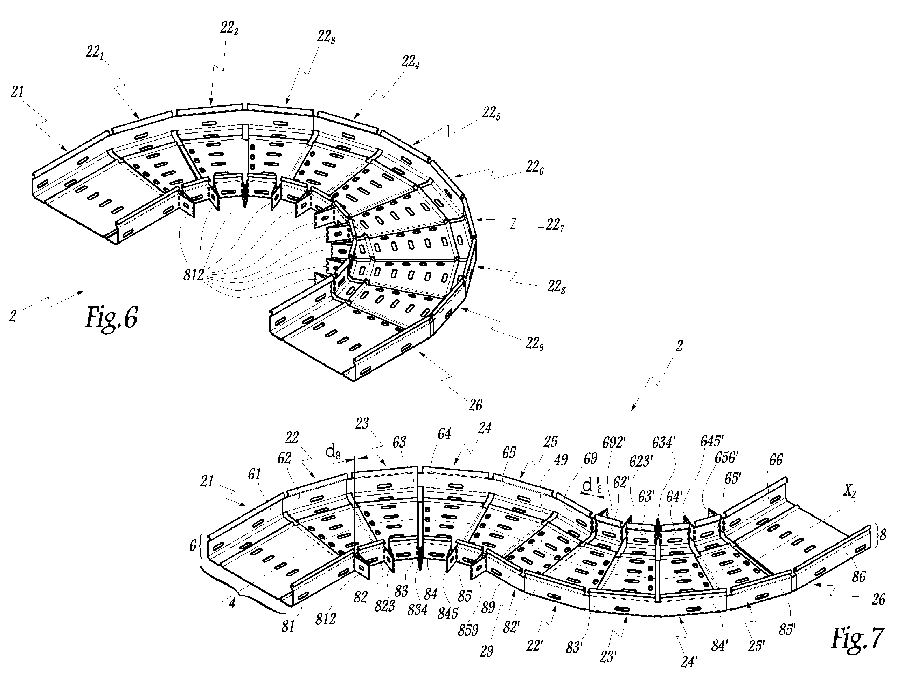

Dans le second mode de réalisation de l'invention représenté à la figure 6, les éléments analogues à ceux du premier mode de réalisation portent les mêmes références. La figure 6 montre que, en augmentant le nombre des modules constitutifs de la goulotte 2, il est possible de réaliser un coude avec un angle de déviation à 180°. Dans le cas d'espèce, la goulotte 2 comprend onze modules, à savoir deux modules 21 et 26 respectivement identiques aux modules 21 et 26 du premier mode de réalisation et neuf modules 22₁ à 22₉ identiques au module 22 du premier mode de réalisation. Ces modules sont reliés, du côté de la paroi 8, par des bandes pliables 812 identiques aux bandes 812 et équivalentes du premier mode de réalisation.

Dans le troisième mode de réalisation représenté à la figure 7, les éléments analogues à ceux du premier mode de réalisation portent les mêmes références. Comme dans les deux premiers modes de réalisation, la goulotte 2 est monobloc et obtenue par découpage et pliage d'un unique flan de tôle.

Dans ce mode de réalisation, la goulotte 2 peut être coudée, dans un plan parallèle à son fond 4, selon deux directions opposées, c'est-à-dire avec deux angles de déviation de sens contraires. Sur une première partie de la goulotte, la paroi 6 constitue la partie externe de la courbure, alors que sur une autre partie de la goulotte, la paroi 6 constitue la partie interne. Pour ce faire, en plus des modules d'extrémité 21 et 26, on utilise un module central 29 dont le fond 49 est à bords parallèles et dont les portions de paroi 69 et 89 sont de même longueur axiale, des modules 22, 23, 24 et 25 dont les portions 62, 63, 64 et 65 constituant des parties de la paroi latérale 6 sont plus longues, parallèlement à un axe central X₂ de la goulotte 2, que les portions 82, 83, 84 et 85 constituant les parties de la paroi latérale 8, ainsi que des modules 22', 23', 24' et 25' dont les portions 82', 83', 84' et 85' constituant les parties de la paroi 8 ont une longueur axiale plus importante que leurs parties latérales 62', 63', 64' et 65' constituant une portion de la paroi 6. Les modules 21 et 26 forment respectivement des portions 61, 81, 66 et 86 des parois latérales 6 et 8.

Des bandes déformables 812, 823, 834, 845, 859, 692', 623', 634', 645' et 656' sont respectivement prévues entre les portions de la paroi 8, pour les modules 21, 22, 23, 24, 25 et 29 et entre les portions de la paroi 6, pour les modules 29, 22', 23', 24', 25' et 26. Comme la goulotte 2 est monobloc, ces bandes sont monoblocs avec les modules qu'elles relient. Ces bandes sont pourvues de lignes de pliages parallèles entre elles et analogues aux lignes L₁ L₂ et L₃ du premier mode de réalisation. Elles permettent, comme dans le premier mode de réalisation, de faire varier l'écart axial d₈ ou d'₆ entre les parties de parois latérales 81, 82, 83, 84, 85, 89, 69, 62', 63', 64', 65' et 66.

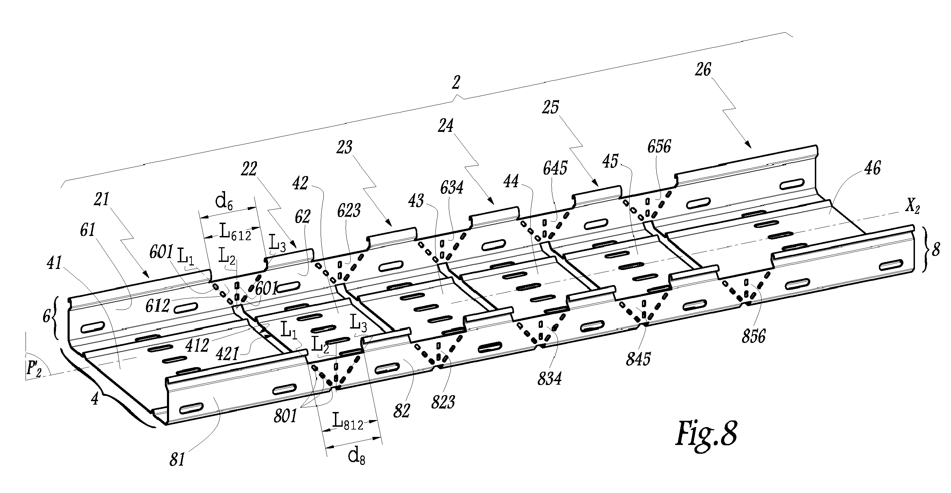

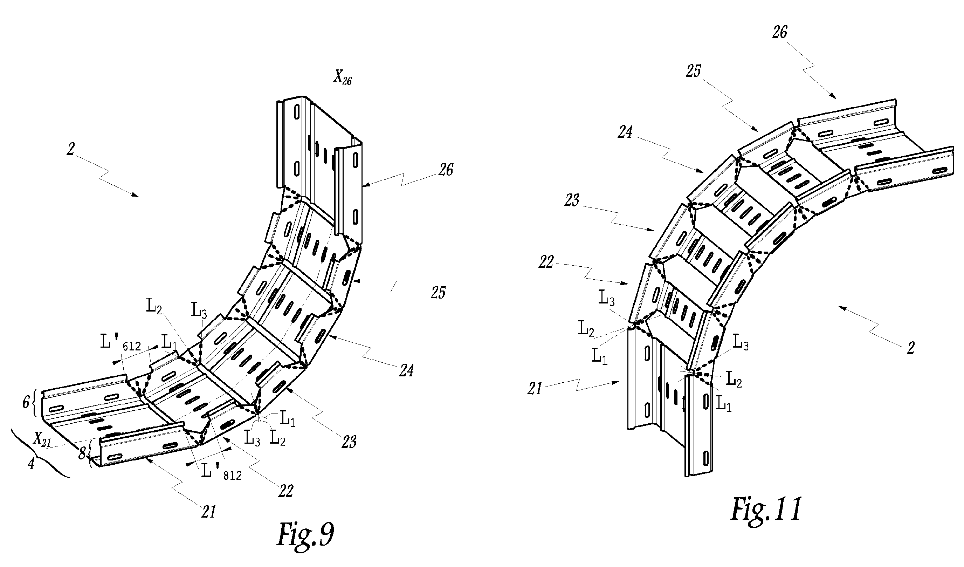

Dans le quatrième mode de réalisation de l'invention représenté aux figures 8 et 9, les éléments analogues à ceux du premier mode de réalisation portent les mêmes références. La goulotte 2 de ce mode de réalisation est également obtenue par découpage et pliage d'un unique flan de tôle d'épaisseur égale à 1 mm environ. Elle est constituée de six modules 21, 22, 23, 24, 25 et 26 définissant chacun une portion du fond 4 et des parois latérales 6 et 8 de la goulotte 2.

A la différence du premier mode de réalisation, les parties 41 à 46 des modules 21 à 26 qui constituent des portions du fond 4 ont des bords parallèles à la fois lorsque la goulotte 2 est en configuration rectiligne représentée à la figure 8 et en configuration courbe représentée à la figure 9. Les parties 61 et 62 des modules 21 et 22 qui constituent des portions de la paroi 6 sont reliées par une bande 612 dans laquelle sont définis trois lignes de pliage préférentiel L₁, L₂ et L₃, aux moyens de perçages 601 ménagés dans cette bande.

Comme précédemment, on note X₂ un axe longitudinal central de la goulotte 2.

La goulotte 2 est symétrique par rapport à un plan P'₂ perpendiculaire au fond 4 et contenant l'axe X₂ dans la configuration de la figure 8.

Ainsi, les parties 81 et 82 des modules 21 et 22 qui définissent des portions de la paroi 8 sont reliées par une bande 812 qui comporte trois lignes de pliage L₁, L₂ et L₃ formées par des perçages 801.

Les lignes de pliage L₁ à L₃ des bandes 612 et 812 sont convergentes en direction du fond 4.

De la même façon, des bandes déformables 623, 634, 645, 656, 823, 834, 845 et 856 relient les portions 62 à 66 et 82 à 86 des modules 22 à 26 et constituent respectivement des parties des parois 6 et 8 pourvues de lignes de pliage convergentes en direction du fond 4 de la goulotte 2.

Ceci permet de faire passer la goulotte de la configuration de la figure 8 à celle de la figure 9 où celle-ci forme un coude rentrant non pas dans un plan parallèle au fond 4, comme dans les modes de réalisation des figures 1 à 7, mais dans un plan parallèle aux parois 6 et 8 et au plan P'₂. La géométrie des bandes 612, 812 et équivalentes, qui sont monoblocs avec les modules qu'elles relient, peut être choisie pour que le coude ainsi formé forme un angle de déviation de 90°, c'est-à-dire que l'angle entre les axes longitudinaux X₂₁ et X₂₆ des modules 21 et 26 soit égal à 90°, lorsque toutes les bandes 612 à 656 et 812 à 856 sont en configuration pliée autour de leurs lignes L₁ à L₃ respectives.

Dans la configuration de la figure 8, l'écart axial d₆ ou d₈ entre les parties de paroi 61 et 62, d'une part, et entre les parties de paroi 81 et 82 d'autre part, a une valeur maximale égale à la plus grande longueur axiale L₆₁₂ ou L₈₁₂ des bandes 612 et 812, ces longueurs étant égales. En passant dans la configuration de la figure 9 où l'axe X₂ est cintré à 90°, l'écart axial précité diminue puisque la longueur maximale des bandes 612 et 812 est réduite respectivement à la valeur L'₆₁₂ OU L'₈₁₂.

Il en va de même au niveau des autres bandes déformables 623 à 656, 823 à 856.

Dans les configurations représentées aux figures 8 et 9, les bords 412 et 421 des parties de fond formées par les modules 21 et 22 sont parallèles. De même en est-il pour les autres bords des parties 42 à 46 du fond 4 de la goulotte 2.

Comme dans les modes de réalisation précédents, il est possible de ne plier que certaines des bandes reliant les modules entre eux, de façon à obtenir un coude plus ouvert. De même, en jouant sur le nombre des modules, il est possible de former un coude à plus de 90°.

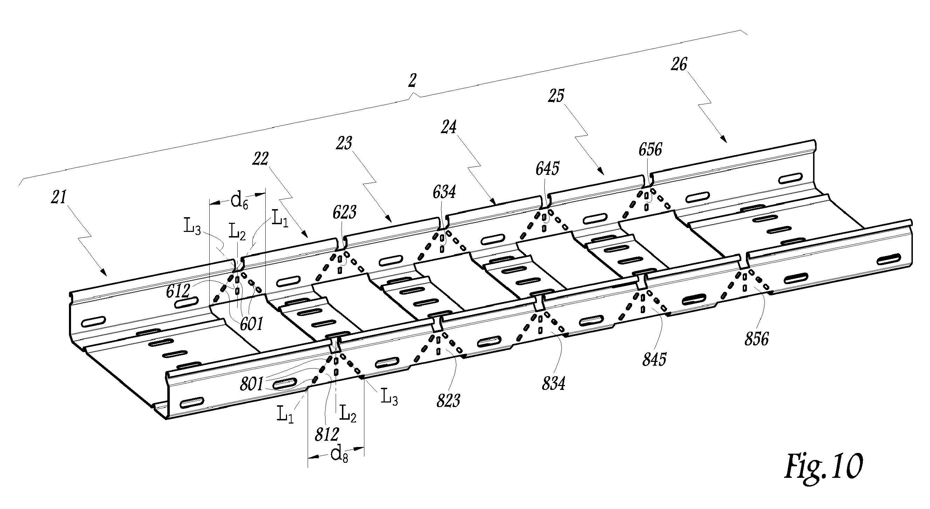

Dans le cinquième mode de réalisation représenté aux figures 10 et 11, les éléments analogues à ceux du premier mode de réalisation portent les mêmes références. Dans ce qui suit, on ne décrit que ce qui distingue ce mode de réalisation du précédent. Dans ce mode de réalisation, les bandes 612 à 656 et 812 à 856 sont pourvues de lignes de pliage préférentielles L₁, L₂, L₃ également réalisées par des perçages 601 et 801 mais qui sont convergentes non pas en direction du fond 4 de la goulotte 2 mais à l'opposé de ce fond, ce qui permet, en pliant certaines ou toutes ces bandes, de cintrer ou couder la goulotte avec une configuration d'angle saillant, comme représenté à la figure 11.

Comme dans les autres modes de réalisation, les bandes 612 à 656, 812 à 856 déterminent l'écart axial d₆ ou d₈ entre les parties des parois 6 et 8. Le pliage de ces bandes selon leurs lignes L₁ à L₃ permet de diminuer cet écart d'une valeur maximale, dans la configuration rectiligne de la figure 10, à une valeur inférieure, dans la configuration de la figure 11.

Comme précédemment, le nombre de bandes effectivement pliées dépend de la configuration recherchée et on peut réaliser un angle de déviation supérieur à 90° en utilisant plus de modules que ceux représentés sur les figures 10 et 11.

Il est également possible de combiner les modes de réalisation des figures 9 et 10, d'une part, 10 et 11, d'autre part, afin de réaliser une goulotte pouvant être cintrée selon deux directions opposées et parallèle au plan P'₂ de la figure 8, avec une approche comparable à celle représentée à la figure 7.

Selon une variante non représentée de l'invention il est même possible d'envisager une goulotte pouvant être coudée à la fois dans un plan parallèle à son fond 4, comme celles des modes de réalisation des figures 1 à 7, et perpendiculairement à ce fond, comme celles des modes de réalisation des figures 8 à 11.

Dans les modes de réalisation des figures 8 à 11, il est également possible de prévoir des moyens d'immobilisation des bandes 612, 812 et équivalentes en configuration pliée, notamment en utilisant des vis, telles que des vis 712 et équivalentes mentionnées en référence au premier mode de réalisation, ou des rivets.

Dans tous les modes de réalisation, les bandes 812 à 856, 612 à 656, 691' à 656' déterminent l'écart axial entre les parties de parois latérales qu'elles relient, cet écart étant représenté par la distance d₈ pour les parois 81 et 82 des trois premiers modes de réalisation et par les distances d₆ et d₈ pour les quatrième et cinquième modes de réalisation. Le pliage de ces bandes permet de faire varier cet écart entre une valeur maximale correspondant à la configuration rectiligne de la goulotte et une valeur plus faible correspondant à une configuration courbe ou cintrée de la goulotte.

Les caractéristiques techniques des différents modes de réalisation mentionnées peuvent être combinées entre elles.

L'invention a été représentée avec des bandes déformables pliées vers l'extérieur de la goulotte, autour des lignes L₁ et L₃. Il est toutefois possible de les plier vers l'intérieur, dans le volume V₂, notamment dans le cas où la goulotte longe une paroi courbe ou lorsqu'elle est disposée à hauteur d'homme. Dans ce cas, on veille à disposer les câbles ou conduites à distance des bandes pliées, afin de ne pas les endommager.

Selon une autre variante non représentée de l'invention, il est possible de prévoir des bandes déformables permettant de réduire l'écart axial entre certains seulement des modules.

## Revendications

1. Goulotte en tôle (2) pour chemin de câbles comprenant un fond (4) et deux parois latérales (6, 8), **caractérisée en ce qu'**elle est monobloc et formée de plusieurs modules (21-26, 22₁-22₉, 29, 22'-25') qui comportent chacun une partie centrale (41-46) définissant une portion du fond (4) de la goulotte et deux parties latérales (61-66, 62'-65', 69, 81-86, 82'-85', 89) définissant chacune une portion d'une des parois latérales (6, 8) de la goulotte et **en ce que** certaines au moins des parties latérales de deux modules adjacents sont reliées par une bande (812-856, 692'-656', 612-656) monobloc avec ces modules et déformable entre une première configuration, où elle est plane, dans le prolongement des parties latérales, et maintient un écart (d₆, d₈) entre les parties latérales à une première valeur (L₈₁₂, L₆₁₂), et une deuxième configuration, où elle est pliée et maintient l'écart entre les parties latérales à une deuxième valeur (L'₈₁₂, L'₆₁₂) inférieure à la première valeur.

2. Goulotte selon la revendication 1, **caractérisée en ce qu'**elle est obtenue par découpage et pliage d'un flan de tôle.

3. Goulotte selon l'une des revendications précédentes, **caractérisée en ce qu'**elle comprend au moins trois modules (21-26, 22₁-22₉, 29, 22'-25') et **en ce que** chaque module est relié à un module adjacent par une bande (812-856, 692'-656', 612-656) monobloc et déformable entre deux configurations où cette bande maintient l'écart (d₆, d₈), entre une paroi latérale (61-66, 62'-65', 69, 81-86, 82'-85', 89) de ce module et une paroi d'un module adjacent, à deux valeurs différentes (L₆₁₂, L₈₁₂, L'₆₁₂, L'₈₁₂)

4. Goulotte selon l'une des revendications précédentes, **caractérisée en ce que** lorsque toutes les bandes latérales (812-856, 692'-656', 612-656) sont dans leur première configuration, la goulotte (2) est rectiligne, alors que, lorsqu'une au moins des bandes latérale est dans sa deuxième configuration, la goulotte est coudée.

5. Goulotte selon l'une des revendications précédentes, **caractérisée en ce qu'**elle comprend des moyens (712-756, 802, 803) d'immobilisation de la ou chaque bande (812-856, 692'-656', 612-656) dans sa seconde configuration.

6. Goulotte selon l'une des revendications précédentes, **caractérisée en ce que** la bande (812-856, 691'-656', 812-856) est pourvue de zones de pliage préférentiel, selon au moins trois lignes (L₁, L₂, L₃).

7. Goulotte selon la revendication 6, **caractérisée en ce que** les trois lignes (L₁, L₂, L₃) de pliage préférentiel sont parallèles.

8. Goulotte selon l'une des revendications précédentes, **caractérisée en ce que** les parties latérales (61-66, 81-86, 62'-65', 82'-85') d'au moins un module (21-26, 22'-25') ont des longueurs différentes, selon une direction parallèle à un axe longitudinal (X₂) de la goulotte (2) en configuration rectiligne, et **en ce qu'**une bande déformable (812-856, 623'-656') relie les parties latérales les plus courtes de deux modules adjacents.

9. Goulotte selon la revendication 5, **caractérisée en ce que** la partie centrale (41-46) d'un module (21-26) comprend un premier bord (412, 423) et un deuxième bord (421, 432) qui relient ses parties latérales (61-66, 81-86) et ne sont pas parallèles entre eux, un premier bord (412) d'un premier module (21) étant non parallèle (α) à un deuxième (421) bord d'un deuxième module (22) qui lui est adjacent lorsque la bande (812) est dans sa première configuration.

10. Goulotte selon la revendication 9, **caractérisée en ce que** la partie centrale (41, 42) d'un module (21, 22) est pourvue d'une languette (512, 523, 534, 545, 556) qui s'étend à partir de son premier bord (412, 423) et qui est apte à venir en recouvrement de la partie centrale (42, 43) d'un module (22, 23) adjacent, lorsque la bande (812, 823) est dans sa deuxième configuration.

11. Goulotte selon la revendication 6, **caractérisée en ce que** les lignes de pliage préférentiel (L₁, L₂, L₃) sont concourantes.

12. Goulotte selon l'une des revendications 1 à 6 et 11, **caractérisée en ce que** les parties latérales (61-66, 81-86) d'un module (21-26) ont la même longueur, selon une direction parallèle à un axe longitudinal (X₂) de la goulotte en configuration rectiligne, et **en ce qu'**une bande déformable (612-656, 812-856) relie chaque partie latérale d'un module avec une partie latérale d'un module adjacent.

13. Goulotte selon l'une des revendications précédentes, **caractérisée en ce qu'**elle comprend au moins trois modules (21-26, 22'-25') et **en ce que** la ou les bandes (812- 856, 691'-656', 612-656) reliant certaines parties latérales de deux modules (23-26) sont aptes à être déformées de leur première configuration vers leur seconde configuration indépendamment de la ou les bandes reliant deux autres modules (21-23), de telle sorte que la goulotte est apte à prendre au moins deux configuration coudées distinctes, en plus d'une configuration rectiligne.
